(19) Europäisches Patentamt / European Patent Office / Office européen des brevets

(11) **EP 4 401 479 A1**

(12) **EUROPEAN PATENT APPLICATION**
published in accordance with Art. 153(4) EPC

(43) Date of publication:
**17.07.2024  Bulletin 2024/29**

(21) Application number: **22874660.8**

(22) Date of filing: **15.09.2022**

(51) International Patent Classification (IPC):
**H04W 64/00** (2009.01)   **G01S 5/16** (2006.01)
**H04B 10/116** (2013.01)   **H04B 10/516** (2013.01)

(52) Cooperative Patent Classification (CPC):
**G01S 5/16; H04B 10/116; H04B 10/516; H04W 64/00**

(86) International application number:
**PCT/CN2022/119142**

(87) International publication number:
**WO 2023/051273 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021  CN 202111159120**

(71) Applicant: **Huawei Technologies Co., Ltd.**
**Shenzhen, Guangdong 518129 (CN)**

(72) Inventors:
• **HUANG, Jingjing**
  **Shenzhen, Guangdong 518129 (CN)**
• **ZHANG, Junping**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD AND APPARATUS FOR COMMUNICATION AND POSITIONING INTEGRATION**

(57) An integrated communication and positioning method and apparatus are provided. The method includes: A network device sends a first constant envelope signal through a light source, where the first constant envelope signal is a single-carrier modulated continuous wave signal; a terminal device obtains the first constant envelope signal; the terminal device sends a second constant envelope signal, where the second constant envelope signal is a signal formed by reflecting the first constant envelope signal by the terminal device; the network device obtains the second constant envelope signal through a PD; the network device determines a distance between the light source and the terminal device based on a phase difference between the first constant envelope signal and the second constant envelope signal; the network device determines location information of the terminal device based on the distance between the light source and the terminal device; the network device performs communication through the first constant envelope signal; and the terminal device demodulates the first constant envelope signal to obtain downlink data. This application helps reduce complexity and costs of integrated communication and positioning.

FIG. 2

**Description**

This application claims priority to Chinese Patent Application No. 202111159120.2, filed with the China National Intellectual Property Administration on September 30, 2021 and entitled "INTEGRATED COMMUNICATION AND POSITIONING METHOD AND APPARATUS", which is incorporated herein by reference in its entirety.

**TECHNICAL FIELD**

This application relates to the communication field, and in particular, to an integrated communication and positioning method and apparatus.

**BACKGROUND**

To resolve spectrum congestion, wireless communication systems gradually develop towards millimeter wave, terahertz, and optical frequency bands. In recent years, an optical wireless communication (optical wireless communication, OWC) technology represented by a light fidelity (light fidelity, Li-Fi) technology has gained wide attention. OWC is considered as one of alternative technologies of a next generation communication system.

The optical wireless communication (optical wireless communication, OWC) technology transmits a signal through visible light, infrared ray, or ultraviolet ray, and can be integrated with an existing radio frequency communication system for wireless communication and indoor high-precision positioning. Compared with a global positioning system (global positioning system, GPS), an ultrasonic positioning technology, a wireless fidelity (wireless fidelity, Wi-Fi) positioning technology, and a Bluetooth positioning technology, the OWC technology has advantages such as low power consumption, high positioning precision, low costs, and wide application scenarios.

Currently, an integrated communication and positioning method based on the OWC technology is highly complex and costly.

**SUMMARY**

This application provides an integrated communication and positioning method and apparatus, to reduce complexity and costs of integrated communication and positioning.

According to a first aspect, this application provides an integrated communication and positioning method. The method includes: A terminal device obtains a first constant envelope signal, where the first constant envelope signal is a single-carrier modulated continuous wave signal; the terminal device sends a second constant envelope signal, where the second constant envelope signal is a signal formed by reflecting the first constant envelope signal by the terminal device, and the second constant envelope signal is used for positioning; and the terminal device demodulates the first constant envelope signal to obtain downlink data.

When the terminal device is in a coverage area of a light source, the terminal device may obtain the first constant envelope signal sent by the light source.

The first constant envelope signal may include the downlink data, and the terminal device may demodulate the first constant envelope signal to obtain the downlink data.

The single-carrier modulated continuous wave signal may be a single-carrier phase-modulated continuous wave signal or a single-carrier frequency-modulated continuous wave signal.

The first constant envelope signal may be reflected by the terminal device. The reflection may be diffuse reflection, specular reflection, or other reflection. This is not limited in embodiments of this application.

Alternatively, a light source may be deployed on the terminal device, and the terminal device sends, to a network device through the light source, an optical signal that carries uplink data. The optical signal that carries the uplink data may not be limited to a continuous wave signal. The optical signal that carries uplink data is not limited in embodiments of this application.

According to the integrated communication and positioning method provided in embodiments of this application, the terminal device can reflect the first constant envelope signal to form the second constant envelope signal for positioning, and can further demodulate the first constant envelope signal to obtain the downlink data. Integrated communication and positioning is implemented, and compared with a multi-carrier modulated signal, the single-carrier modulated signal can be used to obtain a distance from the light source to the terminal device by using a phase difference during positioning, and has lower calculation complexity. During communication of the single-carrier modulated signal, the terminal device can obtain the downlink data by obtaining one signal. This helps improve a communication rate. In addition, a single-carrier modulated constant envelope signal is a continuous wave signal, and has a low requirement on hardware costs. This can reduce costs.

With reference to the first aspect, in some implementations of the first aspect, the method further includes: The terminal device obtains location information, where the location information is location information of the terminal device.

The location information of the terminal device may be two-dimensional location information, or may be three-dimensional location information. This is not limited in embodiments of this application.

According to the integrated communication and positioning method provided in embodiments of this application, the terminal device can obtain the location information, and may implement a function like navigation based on the location information, thereby helping improve user experience.

With reference to the first aspect, in some implementations of the first aspect, a propagation direction of the second constant envelope signal is parallel to a propagation direction of the first constant envelope signal.

The terminal device may implement that the propagation direction of the reflected second constant envelope signal is parallel to the propagation direction of the first constant envelope signal. In other words, the terminal device reflects the first constant envelope signal at an angle of obtaining the first constant envelope signal.

According to the integrated communication and positioning method provided in embodiments of this application, the propagation direction of the second constant envelope signal formed by reflection by the terminal device is parallel to the propagation direction of the first constant envelope signal, and diffuse reflection is alleviated in a spatial multiplexing manner. This helps a reflected constant envelope signal transmitted by the light source be obtained by a photoelectric detector (photoelectric detector, PD) corresponding to the light source, reduces a possibility of obtaining a signal by a PD corresponding to another light source, and improves positioning precision.

With reference to the first aspect, in some implementations of the first aspect, a symbol length of the first constant envelope signal is greater than or equal to two carrier periods of the first constant envelope signal.

According to the integrated communication and positioning method provided in embodiments of this application, the symbol length of the first constant envelope signal is greater than or equal to the two carrier periods of the first constant envelope signal. This can avoid phase ambiguity caused by calculating a phase difference by the network device based on one period, and improve positioning precision. Downlink data can be carried conveniently, and this avoids a disadvantage that one period is inconvenient for carrying data.

With reference to the first aspect, in some implementations of the first aspect, a carrier period T and a communication positioning distance L of the first constant envelope signal meet the following formula: $T > 2 * \dfrac{L}{c}$ , where c represents a speed of light.

According to the integrated communication and positioning method provided in embodiments of this application, the carrier period of the first constant envelope signal can be determined based on the communication positioning distance, and the carrier period of the first constant envelope signal can be flexibly adjusted based on an actual scenario, thereby improving flexibility of integrated communication and positioning.

With reference to the first aspect, in some implementations of the first aspect, a phase difference between the first constant envelope signal and the second constant envelope signal is determined based on a signal between a second carrier period and a last carrier period of each symbol of the first constant envelope signal.

According to the integrated communication and positioning method provided in embodiments of this application, the phase difference is determined based on the signal between the second carrier period and the last carrier period of each symbol of the first constant envelope signal. This can avoid phase ambiguity caused by calculating a phase difference by the network device based on one period, and improve positioning precision. Downlink data can be carried conveniently, and this avoids a disadvantage that one period is inconvenient for carrying data.

According to a second aspect, this application provides an integrated communication and positioning method, used on a network device on which a light source and a photoelectric detector PD are deployed. The method includes: The network device sends a first constant envelope signal through the light source, where the first constant envelope signal is a single-carrier modulated continuous wave signal; the network device obtains a second constant envelope signal through the PD, where the second constant envelope signal is a signal formed by reflecting the first constant envelope signal by a terminal device; the network device determines a distance between the light source and the terminal device based on a phase difference between the first constant envelope signal and the second constant envelope signal; the network device determines location information of the terminal device based on the distance between the light source and the terminal device; and the network device communicates with the terminal device through the first constant envelope signal.

In this application, the light source is deployed on the network device, and the light source is configured to send an optical signal, for example, the single-carrier modulated continuous wave signal.

The first constant envelope signal may include downlink data, and is used to communicate with the terminal device.

In this application, the photoelectric detector (photoelectric detector, PD) is further deployed on the network device. The PD is configured to obtain an optical signal, for example, the second constant envelope signal.

The light source and the PD may be in a one-to-one correspondence, or may be in a one-to-many relationship. This is not limited in embodiments of this application.

Optionally, a lens may be further deployed on the network device, and the lens is configured to refract the second constant envelope signal onto the PD, so that the PD obtains the second constant envelope signal.

Specifically, the second constant envelope signal is the signal formed by reflecting the first constant envelope signal by the terminal device. Compared with the first constant envelope signal, the second constant envelope signal has a changed phase. The network device may obtain the distance to the terminal devices based on the phase difference between the first constant envelope signal and the second constant envelope signal, a modulation frequency of the first constant envelope signal, and a speed of light.

In this application, a quantity of light sources and a quantity of PDs that are deployed on the network device may be related to the location information of the terminal device, or may be related to a quantity of terminal devices, or may be related to a correspondence between the light source and the PD.

When there are a plurality of light sources, the plurality of light sources may simultaneously send the first constant envelope signal.

The network device uses the first constant envelope signal to carry the downlink data, to communicate with the terminal device.

For uplink communication, a light source may also be deployed on the terminal device, and the terminal device sends, to the network device through the light source, an optical signal that carries uplink data. The network device obtains the optical signal through the PD and performs demodulation, to obtain the uplink data. The optical signal that carries the uplink data may not be limited to a continuous wave signal. The optical signal that carries uplink data is not limited in embodiments of this application.

Optionally, communication between the terminal device and the network device may be intra-frequency and time-division, or may be inter-frequency and time-sharing. This is not limited in this embodiment of this application.

In this application, there may be one or more terminal devices. When a terminal device is in a coverage area of the light source, the terminal device communicates with the network device, and the network device may determine location information of the terminal device. When a plurality of terminal devices are in the coverage area of the light source, the plurality of terminal devices may separately communicate with the network device, and the network device may determine location information of the plurality of terminal devices.

Optionally, the plurality of terminal devices may separately communicate with the network device by using code division multiple access.

According to the integrated communication and positioning method provided in this embodiment of this application, the network device sends the single-carrier modulated constant envelope signal through the light source. The signal may be used for positioning of the network device, or may be used for communication of the terminal device. Integrated communication and positioning is implemented, and compared with a multi-carrier modulated signal, the single-carrier modulated signal can be used to obtain, during positioning, a distance from the light source to the terminal device by calculating a phase difference, and has lower calculation complexity. During communication of the single-carrier modulated signal, the terminal device can obtain the downlink data by obtaining one signal. This helps improve a communication rate. In addition, a single-carrier modulated constant envelope signal is a continuous wave signal, and has a low requirement on hardware costs. This can reduce costs.

With reference to the second aspect, in some implementations of the second aspect, the method further includes: The network device sends the location information of the terminal device.

After determining the location information of the terminal device, the network device may send the location information of the terminal device to the terminal device. After obtaining the location information, the terminal device may implement a function such as navigation.

According to the integrated communication and positioning method provided in this embodiment of this application, the network device sends the location information of the terminal device to the terminal device, and both the network device and the terminal device may determine the location information of the terminal device. This is more conducive to uplink or downlink communication. In addition, the terminal device may implement the function such as navigation based on the location information, thereby improving user experience.

With reference to the second aspect, in some implementations of the second aspect, a propagation direction of the second constant envelope signal is parallel to a propagation direction of the first constant envelope signal.

According to the integrated communication and positioning method provided in embodiments of this application, the propagation direction of the second constant envelope signal formed by reflection by the terminal device is parallel to the propagation direction of the first constant envelope signal. This helps a reflected constant envelope signal transmitted by the light source be obtained by a PD corresponding to the light source, reduces a possibility of obtaining a signal by a PD corresponding to another light source, and improves positioning precision.

Optionally, the network device may further alleviate a phenomenon of diffuse reflection by using transmit power of the light source.

According to the integrated communication and positioning method provided in this embodiment of this application, when the terminal device can demodulate the downlink data and the network device can implement positioning, the transmit power of the light source is reduced as much as possible, so that a constant envelope signal transmitted by the light source is obtained by the PD corresponding to the light source after being reflected, thereby reducing a possibility of obtaining the signal by the PD corresponding to the another light source, and improving positioning precision.

With reference to the second aspect, in some implementations of the second aspect, a symbol length of the first constant envelope signal is greater than or equal to two carrier periods of the first constant envelope signal.

According to the integrated communication and positioning method provided in this embodiment of this application, the symbol length of the first constant envelope signal is greater than or equal to the two carrier periods of the first constant envelope signal. This can avoid phase ambiguity caused by calculating a phase difference by the network device based on one period, and improve positioning precision. Downlink data can be carried conveniently, and this avoids a disadvantage that one period is inconvenient for carrying data.

With reference to the second aspect, in some implementations of the second aspect, a carrier period T and a communication positioning distance L of the first constant envelope signal meet the following formula:

$$T > 2*\frac{L}{c},$$

where c represents a speed of light.

According to the integrated communication and positioning method provided in embodiments of this application, the carrier period of the first constant envelope signal can be determined based on the communication positioning distance, and the carrier period of the first constant envelope signal can be flexibly adjusted based on an actual scenario, thereby improving flexibility of integrated communication and positioning.

With reference to the second aspect, in some implementations of the second aspect, a phase difference between the first constant envelope signal and the second constant envelope signal is determined based on a signal between a second carrier period and a last carrier period of each symbol of the first constant envelope signal.

According to the integrated communication and positioning method provided in this embodiment of this application, the symbol length of the first constant envelope signal is greater than or equal to the two carrier periods of the first constant envelope signal. This can avoid phase ambiguity caused by calculating a phase difference by the network device based on one period, and improve positioning precision. Downlink data can be carried conveniently, and this avoids a disadvantage that one period is inconvenient for carrying data.

With reference to the second aspect, in some implementations of the second aspect, there are at least four light sources, and the location information of the terminal device is three-dimensional coordinates.

According to a third aspect, this application provides an integrated communication and positioning apparatus. The apparatus includes a transceiver unit and a processing unit. The transceiver unit is configured to: obtain a first constant envelope signal, where the first constant envelope signal is a single-carrier modulated continuous wave signal; and send a second constant envelope signal, where the second constant envelope signal is a signal formed by reflecting the first constant envelope signal by the apparatus, and the second constant envelope signal is used for positioning. The processing unit is configured to demodulate the first constant envelope signal to obtain downlink data.

With reference to the third aspect, in some implementations of the third aspect, the transceiver unit is further configured to obtain location information, where the location information is location information of the apparatus.

With reference to the third aspect, in some implementations of the third aspect, a propagation direction of the second constant envelope signal is parallel to a propagation direction of the first constant envelope signal.

With reference to the third aspect, in some implementations of the third aspect, a symbol length of the first constant envelope signal is greater than or equal to two carrier periods of the first constant envelope signal.

With reference to the third aspect, in some implementations of the third aspect, a carrier period T and a communication positioning distance L of the first constant envelope signal meet the following formula:

$$T > 2*\frac{L}{c},$$

where c represents a speed of light.

With reference to the third aspect, in some implementations of the third aspect, a phase difference between the first constant envelope signal and the second constant envelope signal is determined based on a signal between a second carrier period and a last carrier period of each symbol of the first constant envelope signal.

According to a fourth aspect, this application provides an integrated communication and positioning apparatus. The apparatus includes a transceiver unit and a processing unit. The transceiver unit is configured to: send a first constant envelope signal through a light source, where the first constant envelope signal is a single-carrier modulated continuous wave signal; and obtain a second constant envelope signal through a photoelectric detector PD, where the second constant envelope signal is a signal formed by reflecting the first constant envelope signal by a terminal device. The processing unit is configured to: determine a distance between the light source and the terminal device based on a phase difference between the first constant envelope signal and the second constant envelope signal; and determine location information of the terminal device based on the distance between the light source and the terminal device. The transceiver unit is further configured to communicate with the terminal device through the first constant envelope signal.

With reference to the fourth aspect, in some implementations of the fourth aspect, the transceiver unit is further configured to send location information of the terminal device.

With reference to the fourth aspect, in some implementations of the fourth aspect, a propagation direction of the second constant envelope signal is parallel to a propagation direction of the first constant envelope signal.

With reference to the fourth aspect, in some implementations of the fourth aspect, a symbol length of the first constant envelope signal is greater than or equal to two carrier periods of the first constant envelope signal.

With reference to the fourth aspect, in some implementations of the fourth aspect, a carrier period T and a

$$T > 2 * \frac{L}{c}$$

communication positioning distance L of the first constant envelope signal meet the following formula: , where c represents a speed of light.

With reference to the fourth aspect, in some implementations of the fourth aspect, a phase difference between the first constant envelope signal and the second constant envelope signal is determined based on a signal between a second carrier period and a last carrier period of each symbol of the first constant envelope signal.

With reference to the fourth aspect, in some implementations of the fourth aspect, there are at least four light sources, and the location information of the terminal device is three-dimensional coordinates.

According to a fifth aspect, this application provides an integrated communication and positioning apparatus, configured to perform the method in any one of the foregoing aspects or the possible implementations of the foregoing aspects. Specifically, the apparatus includes units configured to perform the method in the foregoing aspects or any possible implementation of the aspects.

In a design, the apparatus may include modules for one-to-one correspondingly performing the methods/operations/steps/actions described in the foregoing aspects. The module may be a hardware circuit, or may be software, or may be implemented by a hardware circuit in combination with software.

In another design, the apparatus is a communication chip. The communication chip may include an input circuit or an interface configured to send information or data, and an output circuit or an interface configured to receive information or data.

In another design, the apparatus is a communication device, including a transmitter configured to send information or data and a receiver configured to receive information or data.

In another design, the apparatus is configured to perform the method in any one of the foregoing aspects or the possible implementations of the foregoing aspects. The apparatus may be configured in the foregoing terminal device or network device, or the apparatus is the foregoing terminal device or network device.

According to a sixth aspect, an integrated communication and positioning apparatus is provided, including a processor and a memory. The memory is configured to store a computer program, and the processor is configured to invoke the computer program from the memory and run the computer program, so that the apparatus performs the method in any possible implementation of the first aspect.

Optionally, there are one or more processors, and there are one or more memories.

Optionally, the memory may be integrated with the processor, or the memory and the processor are separately disposed.

Optionally, the communication device further includes a transmitter machine (transmitter) and a receiver machine (receiver). The transmitter machine and the receiver machine may be disposed separately, or may be integrated together, and are referred to as a transceiver machine (transceiver).

According to a seventh aspect, another integrated communication and positioning apparatus is provided, including a processor, a light source, a photoelectric detector PD, and a memory. The light source is configured to send a first constant envelope signal, the photoelectric detector PD is configured to receive a second constant envelope signal, the memory is configured to store a computer program, and the processor is configured to invoke the computer program from the memory and run the computer program, so that the apparatus performs the method in any possible implementation of the second aspect.

Optionally, there are one or more processors, and there are one or more memories.

Optionally, the memory may be integrated with the processor, or the memory and the processor are separately disposed.

Optionally, the communication device further includes a transmitter machine (transmitter) and a receiver machine (receiver). The transmitter machine and the receiver machine may be disposed separately, or may be integrated together, and are referred to as a transceiver machine (transceiver).

According to an eighth aspect, a communication system is provided, including an apparatus configured to implement the method according to any one of the first aspect or the possible implementations of the first aspect, and an apparatus configured to implement the method according to any one of the second aspect or the possible implementations of the second aspect.

In a possible design, the communication system may further include another device that interacts with the terminal device and/or the network device in the solutions provided in embodiments of this application.

According to a ninth aspect, a terminal device is provided, including an input/output interface and a logic circuit. The input/output interface is configured to obtain a first constant envelope signal, and the logic circuit is configured to demodulate the first constant envelope signal to obtain downlink data, so that the terminal device performs the method in any one of the possible implementations of the first aspect.

According to a tenth aspect, a network device is provided, including an input/output interface and a logic circuit. The input/output interface is configured to send a first constant envelope signal through a light source, and the logic circuit is configured to determine location information, so that the network device performs the method in any possible implementation of the second aspect.

According to an eleventh aspect, a computer-readable medium is provided. The computer-readable medium stores a computer program (which may also be referred to as code or instructions). When the computer program is run on a computer, the computer is enabled to perform the method according to any possible implementation of any one of the foregoing aspects.

According to a twelfth aspect, a computer program product is provided. The computer program product includes a computer program (which may also be referred to as code or instructions). When the computer program is run, a computer is enabled to perform the method according to any possible implementation of any one of the foregoing aspects.

For technical effects that can be achieved in any one of the third aspect to the twelfth aspect and any possible design of the third aspect to the twelfth aspect, refer to descriptions of technical effects that can be achieved in the first aspect or the second aspect. Details are not described herein again.

## BRIEF DESCRIPTION OF DRAWINGS

FIG. 1 is a schematic diagram of a communication system to which an embodiment of this application is applicable;

FIG. 2 is a schematic flowchart of an integrated communication and positioning method according to an embodiment of this application;

FIG. 3 is a schematic diagram of a first constant envelope signal according to an embodiment of this application;

FIG. 4 is a schematic diagram of a phase difference between a first constant envelope signal and a second constant envelope signal according to an embodiment of this application;

FIG. 5 is a schematic diagram of a system architecture according to an embodiment of this application;

FIG. 6 is a schematic diagram of phase differences between a plurality of constant envelope signals according to an embodiment of this application;

FIG. 7 is a schematic diagram of a deployment mode of a plurality of LEDs according to an embodiment of this application;

FIG. 8 is a schematic diagram of a coverage area of an LED according to an embodiment of this application;

FIG. 9 is a schematic diagram of a deployment mode of an LED and a PD array according to an embodiment of this application;

FIG. 10 is a schematic diagram of a scenario in which a network device locates and communicates with a plurality of terminal devices according to an embodiment of this application;

FIG. 11 is a schematic diagram of an integrated communication and positioning apparatus according to an embodiment of this application;

FIG. 12 is a schematic diagram of another integrated communication and positioning apparatus according to an embodiment of this application;

FIG. 13 is a schematic diagram of still another integrated communication and positioning apparatus according to an embodiment of this application; and

FIG. 14 is a schematic diagram of yet another integrated communication and positioning apparatus according to an embodiment of this application.

## DESCRIPTION OF EMBODIMENTS

The following describes technical solutions of this application with reference to accompanying drawings.

With the rapid increase of wireless fidelity (WI-FI) technology users, limitations of the Wi-Fi technology become increasingly prominent. The Wi-Fi technology uses the radio transmission protocol. Availability of radio bandwidth is limited within a designed frequency range. With the rapid increase of users, a radio transmission speed is reduced, and network transmission quality of a network-based multimedia service (such as Internet surfing and video conferencing) is greatly reduced, which greatly affects user experience.

To resolve spectrum congestion, wireless communication systems gradually develop towards millimeter wave, terahertz, and optical frequency bands. In recent years, an optical wireless communication (optical wireless communication, OWC) technology represented by a light fidelity (light fidelity, Li-Fi) technology has gained wide attention. OWC is considered as one of alternative technologies of next generation communication system.

Optical wireless communication (optical wireless communication, OWC) technology transmits signals through visible light, infrared ray, or ultraviolet ray, and has advantages such as large capacity, license-free, good confidentiality, and no electromagnetic interference, which gradually attracts wide attention.

The OWC technology can implement high-precision positioning in terms of positioning, and has some advantages over a global positioning system (GPS), an ultrasonic positioning technology, a Wi-Fi positioning technology, and a Bluetooth positioning technology. Specifically, a positioning technology of a global positioning system has become mature in outdoor positioning. However, in an indoor environment, a radio signal is blocked by a building, so that a signal obtained by a located object is weak. Consequently, positioning precision cannot meet an indoor standard. Therefore, a satellite positioning technology such as a GPS is hardly applicable to an indoor environment.

Currently, common indoor positioning technologies include the ultrasonic positioning technology, the Wi-Fi positioning technology, the Bluetooth positioning technology, and the like. The ultrasonic positioning technology performs distance measurement based on a time difference between an echo wave and a transmit wave, and has high positioning precision. However, a large quantity of measurement devices need to be deployed in space, and positioning costs are high. The Bluetooth positioning technology performs positioning by measuring signal strength, and is applicable to short-distance and small-range positioning, but has a disadvantage of poor stability. The Wi-Fi positioning technology performs positioning by measuring a distance between a user and a wireless hotspot, and is vulnerable to interference of other signals. In addition, power consumption of a locator is high.

However, in an indoor positioning technology based on the OWC technology, a light emitting diode (light emitting diode, LED) is used as a light source, and an LED has advantages such as a long service life, low power consumption, a small size, and environmental protection. In addition, the LED can be used for lighting, and may be spread indoors. A located object obtains a strong signal, and a positioning system has good stability. In addition, OWC indoor positioning may be based on a natural condition of an indoor LED, and no additional special transmission point needs to be disposed, thereby reducing device and maintenance costs. In addition, the popularity of the LED and the advantages of no electromagnetic interference enable OWC indoor positioning to be applied to a large quantity of scenarios. Therefore, the OWC technology has advantages such as low power consumption, high positioning precision, low costs, and wide application scenarios in positioning.

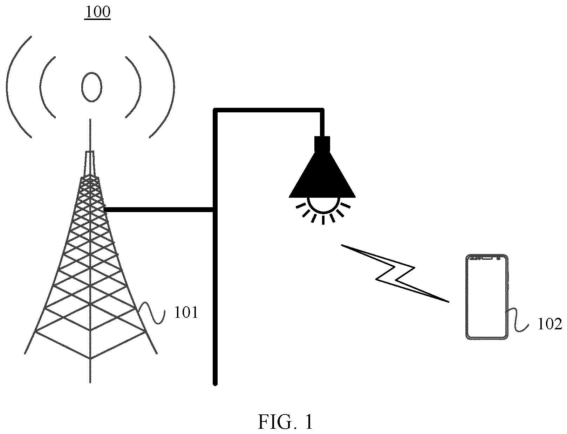

The OWC technology can implement communication and positioning, in other words, integrated communication and positioning can be implemented based on the OWC technology. FIG. 1 is a schematic diagram of a communication system 100 for performing communication and positioning based on the OWC technology. As shown in FIG. 1, the communication system 100 includes a network device 101 and a terminal device 102. A light source (for example, a street lamp) is deployed on the network device 101, and the light source may be connected to the network device through an antenna. There may be at least one light source and at least one terminal device 102. A quantity of light sources and a quantity of terminal devices 102 are not limited in this embodiment of this application.

The terminal device includes a device that provides a voice and/or data connectivity for a user. Specifically, the terminal device includes a device that provides a voice for a user, or includes a device that provides data connectivity for a user, or includes a device that provides a voice and data connectivity for a user. For example, a handheld device with a wireless connection function or a processing device connected to a wireless modem may be included. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) communication terminal device, a vehicle to everything (vehicle to everything, V2X) terminal device, a machine-to-machine/machine-type communication (machine-to-machine/machine-type communications, M2M/MTC) terminal device, an internet of things (Internet of things, IoT) terminal device, a light terminal device (light UE), a subscriber unit (subscriber unit), a subscriber station (subscriber station), and a mobile station (mobile station), a remote station (remote station), an access point (access point, AP), a remote terminal (remote terminal), an access terminal (access terminal), a user terminal (user terminal), a user agent (user agent), or a user device (user device). For example, the terminal device may include a mobile phone (or referred to as a "cellular" phone), a computer having a mobile terminal device, or a portable, pocket-sized, hand-held, or a computer-embedded mobile apparatus. For example, it may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU). In embodiments of this application, the terminal device may further include a relay (relay). Alternatively, it may be understood that any device that can perform data communication with a base station may be considered as a terminal device.

In this embodiment of this application, the apparatus configured to implement a function of the terminal device may be a terminal device, or may be an apparatus that can support the terminal device in implementing the function, for example, a chip system. The apparatus may be installed in the terminal device. In this embodiment of this application, the chip system may include a chip, or may include a chip and another discrete component. In the technical solutions provided in embodiments of this application, an example in which an apparatus configured to implement a function of a terminal is a terminal device is used to describe the technical solutions provided in embodiments of this application.

On one hand, the network device 101 may send an optical signal to the terminal device 102 through a light source. After obtaining the optical signal, the terminal device may demodulate the optical signal to obtain downlink data, to implement a communication function. On the other hand, the optical signal sent by the network device 101 may be reflected by the terminal device 102, and the network device 101 may obtain the reflected optical signal. The network device 101 may obtain location information of the terminal device 102 based on a phase difference between the sent optical signal and the obtained reflected optical signal, to implement positioning of the terminal device 102, to implement a positioning function.

It should be understood that an optical signal used for communication and an optical signal used for positioning may be one signal, or may be two signals. This is not limited in this embodiment of this application.

To better understand embodiments of this application, terms in embodiments of this application are first described.

1. Single-carrier: a modulation technology that uses only one carrier in a fixed frequency band, for example, quadrature amplitude modulation (quadrature amplitude modulation, QAM).
Single-carrier modulation modulates a to-be-transmitted data flow to a single carrier for transmission.
2. Multi-carrier: a modulation technology that uses a plurality of carriers in a fixed frequency band, for example, coded orthogonal frequency division multiplexing (coded orthogonal frequency division multiplexing, COFDM).
Multi-carrier modulation refers to that a to-be-transmitted data signal is converted into parallel low-speed sub-data flows by using a plurality of carrier signals, and then the parallel low-speed sub-data flows are modulated to the carrier signals for transmission.
3. Continuous wave: a wave that is continuous on a time axis and that is output by a laser in a continuous manner, for example, a continuous square wave, a sine wave, or a cosine wave.
A waveform of the continuous wave may be non-modulated or modulated.
4. Pulse wave: a wave that is discontinuous in time and radiated by a laser in an intermittent manner.
5. Envelope: a difference of amplitudes, that is, different amplitudes indicate different information. Constant envelope indicates an amplitude that does not change.

At present, most optical signals used for communication and positioning are pulse signals based on multi-carrier modulation. A network device transmits, in parallel by using a plurality of carrier signals, a to-be-transmitted data signal, and a terminal device may reflect the plurality of carrier signals. The network device obtains location information of the terminal device based on the sent plurality of carrier signals and an obtained phase difference between the reflected plurality of carrier signals. In this process, the network device needs to calculate the phase difference of the plurality of carrier signals. A calculation amount is large, and positioning implementation complexity is high. If the network device sends a pulse signal to perform positioning, a high requirement is imposed on hardware of the network device. As a result, costs of integrated communication and positioning are high.

In view of this, embodiments of this application provide an integrated communication and positioning method and apparatus, to reduce complexity and costs of integrated communication and positioning.

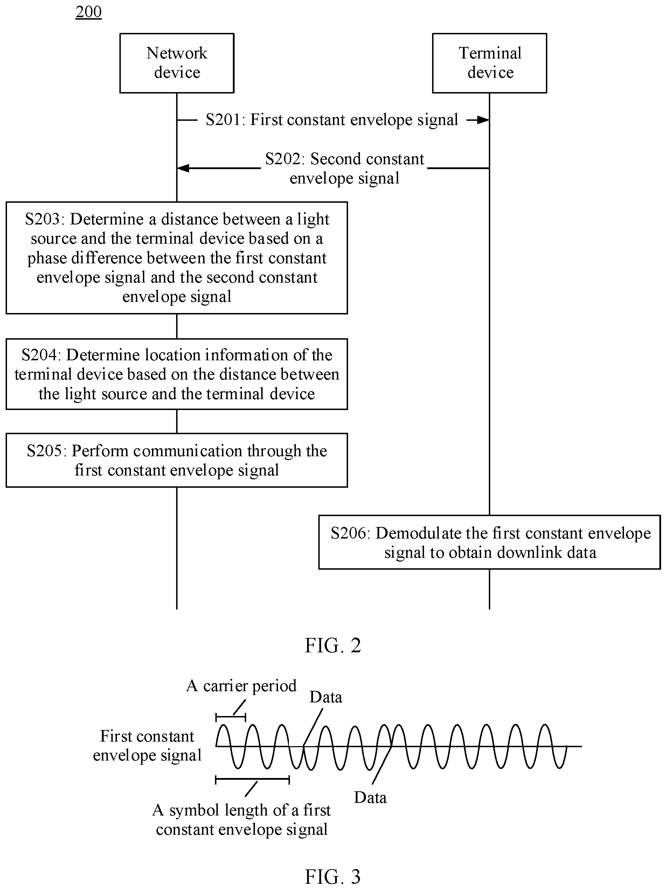

FIG. 2 is a schematic flowchart of an integrated communication and positioning method 200 according to an embodiment of this application. The method is applicable to the scenario shown in FIG. 1, but is not limited to the scenario. As shown in FIG. 2, the method 200 may include the following steps.

S201: A network device sends a first constant envelope signal through a light source, where the first constant envelope signal is a single-carrier modulated continuous wave signal, and correspondingly, a terminal device obtains the first constant envelope signal.

In this embodiment of this application, the light source is deployed on the network device, and the light source is configured to send an optical signal, for example, the single-carrier modulated continuous wave signal. When the terminal device is in a coverage area of the light source, the terminal device may obtain the first constant envelope signal sent by the light source.

It should be understood that the single-carrier modulated continuous wave signal may be a single-carrier phase-modulated continuous wave signal or a single-carrier frequency-modulated continuous wave signal. This is not limited in this embodiment of this application.

S202: The terminal device sends a second constant envelope signal, where the second constant envelope signal is a signal formed by reflecting the first constant envelope signal by the terminal device, the second constant envelope signal is used for positioning, and correspondingly, the network device obtains the second constant envelope signal through a PD.

In this embodiment of this application, the photoelectric detector (photoelectric detector, PD) is further deployed on the network device. The PD is configured to obtain an optical signal, for example, the second constant envelope signal.

It should be understood that the light source and the PD may be in a one-to-one correspondence, or may be in a one-to-many relationship. This is not limited in this embodiment of this application.

It should be further understood that the first constant envelope signal may be reflected by the terminal device. The reflection may be diffuse reflection, specular reflection, or other reflection. This is not limited in this embodiment of this application.

Optionally, a lens may be deployed on the network device, and the lens is configured to refract the second constant envelope signal onto the PD, so that the PD obtains the second constant envelope signal.

Because a volume of the PD is small, an area of obtaining the second constant envelope signal is small. The network device may deploy the lens for the PD, the second constant envelope signal may be refracted to the PD through the lens, and the PD obtains the second constant envelope signal. This helps the PD obtain more second constant envelope signals.

S203: The network device determines a distance between the light source and the terminal device based on a phase difference between the first constant envelope signal and the second constant envelope signal.

Specifically, the second constant envelope signal is the signal formed by reflecting the first constant envelope signal by the terminal device. Compared with the first constant envelope signal, the second constant envelope signal has a changed phase. Therefore, the network device may obtain the distance to the terminal device based on the phase difference between the first constant envelope signal and the second constant envelope signal, a modulation frequency of the first constant envelope signal, and a speed of light.

For example, the first constant envelope signal may be represented as $s(t)=\cos(\omega t)$, where $\omega$ is an angular velocity, and t is a time point. The second constant envelope signal may be represented as $r(t)=1+\cos(\omega t-\varphi)$, where $\varphi$ is the phase difference. A cross-correlation function of the first constant envelope signal and the second constant envelope signal is $$c(\tau)=\frac{1}{2}*\cos(\varphi+\omega\tau)$$ . The network device may sample the cross-correlation function $c(\tau)$ in a carrier period, for example, at moments of $\omega*\tau\_0 = 0°$, $\omega*\tau\_90 = 90°$, $\omega*\tau\_180=180°$, and $\omega*\tau\_270=270°$, may obtain

$$c(\tau_0)=\frac{1}{2}*\cos(\varphi) \quad , \qquad c(\tau_{90})=\frac{1}{2}*\sin(\varphi) \qquad c(\tau_{180})=-\frac{1}{2}*\cos(\varphi) \quad , \qquad c(\tau_{270})=-\frac{1}{2}*\sin(\varphi) \qquad ,$$

and may obtain the phase difference $$\varphi=\arctan(\frac{c(\tau_{270})-c(\tau_{90})}{c(\tau_0)-c(\tau_{180})})$$ . Then, the network device may determine the distance between the light source and the terminal device according to a formula $d = \dfrac{c * \varphi}{4\pi * f}$ . *f* is the modulation frequency of the first constant envelope signal, and *c* is the speed of light.

S204: The network device determines location information of the terminal device based on the distance between the light source and the terminal device.

The location information of the terminal device may be two-dimensional location information, or may be three-dimensional location information. This is not limited in embodiments of this application.

In this embodiment of this application, a quantity of light sources and a quantity of PDs that are deployed on the network device may be related to the location information of the terminal device, or may be related to a quantity of terminal devices, or may be related to a correspondence between the light source and the PD.

In a possible implementation, the location information of the terminal device is two-dimensional location information, for example, (x, y). The network device needs to obtain distances between at least three light sources and the terminal device, then establish equations corresponding to at least three circles by using the distances between the at least three light sources and the terminal device as radii, and obtain, based on a least square method, an intersection point of the equations corresponding to the at least three circles, where the intersection point is the two-dimensional location information of the terminal device. Therefore, when the location information of the terminal device is the two-dimensional location information, the network device needs to deploy at least three light sources.

In another possible implementation, the location information of the terminal device is three-dimensional location information, for example, (x, y, z). The network device needs to obtain distances between at least four light sources and the terminal device, then establish equations corresponding to at least four circles by using the distances between the at least four light sources and the terminal device as radii, and obtain, based on a least square method, an intersection point of the equations corresponding to the at least four circles, where the intersection point is the three-dimensional location information of the terminal device. Therefore, when the location information of the terminal device is the three-dimensional location information, the network device needs to deploy at least four light sources.

Further, if the light source and the PD are in a one-to-one correspondence, that is, one light source corresponds to one PD, the network device needs to deploy at least four corresponding PDs for the at least four light sources. If the light source and the PD are in a one-to-many relationship, that is, one light source corresponds to a plurality of PDs, a plurality of PDs corresponding to one light source are referred to as one PD array in this specification, and the network device needs to deploy at least four corresponding PD arrays for the at least four light sources. It should be understood that a minimum PD array is 2*2.

For example, the location information of the terminal device is the three-dimensional location information, and four light sources and four PDs may be deployed on the network device, or four light sources and four PD arrays may be deployed on the network device.

Generally, there are a plurality of terminal devices in a coverage area of the network device, that is, there are at least two terminal devices. If the network device sends at least four first constant envelope signals through the at least four light sources, the at least two terminal devices may receive and reflect first constant envelope signals in coverage areas of respective light sources. In this case, different PDs in the at least four PD arrays corresponding to the at least four light sources may obtain constant envelope signals reflected by different terminal devices, and then obtain, based on a phase difference between the sent constant envelope signals and the reflected constant envelope signals, distances between the light source and different terminal devices, to determine location information of the different terminal devices.

In this embodiment of this application, when there are a plurality of light sources, the plurality of light sources may simultaneously send the first constant envelope signal.

S205: The network device performs communication through the first constant envelope signal.

The network device uses the first constant envelope signal to carry downlink data, to communicate with the terminal device.

S206: The terminal device demodulates the first constant envelope signal to obtain the downlink data.

For downlink communication, the terminal device may obtain the downlink data based on the first constant envelope signal. For uplink communication, a light source may also be deployed on the terminal device, and the terminal device sends, to the network device through the light source, an optical signal that carries uplink data. The network device obtains the optical signal through the PD and performs demodulation, to obtain the uplink data. The optical signal that carries the uplink data may not be limited to a continuous wave signal. In other words, the optical signal that carries uplink data is not limited in embodiments of this application.

Optionally, communication between the terminal device and the network device may be intra-frequency and time-division, or may be inter-frequency and time-sharing. This is not limited in this embodiment of this application.

There may be one or more terminal devices in this embodiment of this application. When a terminal device is in a coverage area of the light source, the terminal device communicates with the network device, and the network device may determine location information of the terminal device. When a plurality of terminal devices are in the coverage area of the light source, the plurality of terminal devices may separately communicate with the network device, and the network device may determine location information of the plurality of terminal devices.

Optionally, the plurality of terminal devices may separately communicate with the network device by using code division multiple access.

According to the integrated communication and positioning method provided in this embodiment of this application, the network device sends the single-carrier modulated constant envelope signal through the light source. The signal may be used for positioning of the network device, or may be used for communication of the terminal device. Integrated communication and positioning is implemented, and compared with a multi-carrier modulated signal, the single-carrier modulated signal can be used to obtain a distance from the light source to the terminal device by using a phase difference during positioning, and has lower calculation complexity. During communication of the single-carrier modulated signal, the terminal device can obtain the downlink data by obtaining one signal. This helps improve a communication rate. In addition, a single-carrier modulated constant envelope signal is a continuous wave signal, and has a low requirement on hardware costs. This can reduce costs.

In an optional embodiment, the method 200 further includes: The network device sends location information to the terminal device, where the location information is the location information of the terminal device, and correspondingly, the terminal device obtains the location information.

After determining the location information of the terminal device, the network device may send the location information of the terminal device to the terminal device. After obtaining the location information, the terminal device may implement a function such as navigation.

According to the integrated communication and positioning method provided in this embodiment of this application, the network device sends the location information of the terminal device to the terminal device, and both the network device and the terminal device may determine the location information of the terminal device. This is more conducive to uplink or downlink communication. In addition, the terminal device may implement the function such as navigation based on the location information, thereby improving user experience.

In an optional embodiment, a symbol length of the first constant envelope signal is greater than or equal to two carrier periods of the first constant envelope signal.

For example, a symbol length of the first constant envelope signal may be three carrier periods. FIG. 3 is a schematic diagram of a first constant envelope signal. As shown in FIG. 3, the first constant envelope signal is a continuous sine wave signal, and a symbol length of the first constant envelope signal is three carrier periods. When the first constant envelope signal carries data, a sine wave is inverted into a cosine wave, or a cosine wave is inverted into a sine wave. Optionally, the data may be downlink data used for communication.

Optionally, a phase difference between the first constant envelope signal and the second constant envelope signal may be determined based on a signal between a second carrier period and a last carrier period of each symbol of the first constant envelope signal.

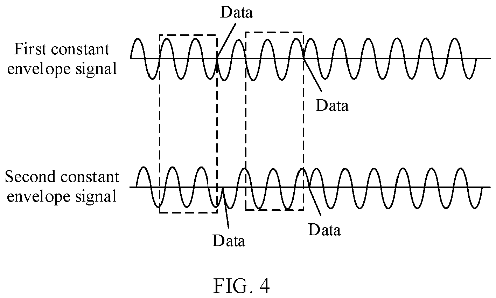

For example, FIG. 4 is a schematic diagram of a phase difference between a first constant envelope signal and a second constant envelope signal. As shown in FIG. 4, a symbol length of the first constant envelope signal is three carrier periods, the first constant envelope signal carries downlink data, the first constant envelope signal is reflected by the terminal device to form the second constant envelope signal, and a phase difference between the second constant envelope signal and the first constant envelope signal changes.

When calculating the phase difference, the network device may determine the phase difference based on signals between a second carrier period and a third carrier period of each symbol of the first constant envelope signal, as shown in an area in a rectangular dashed box in FIG. 4.

According to the integrated communication and positioning method provided in this embodiment of this application, the symbol length of the first constant envelope signal is greater than or equal to the two carrier periods of the first constant envelope signal. This can avoid phase ambiguity caused by calculating a phase difference by the network device based on one period, and improve positioning precision. Downlink data can be carried conveniently, and this avoids a disadvantage that one period is inconvenient for carrying data.

Optionally, the carrier period of the first constant envelope signal may be determined by the communication positioning distance and the speed of light.

Optionally, a carrier period T and a communication positioning distance L of the first constant envelope signal meet the following formula:

$$T > 2 * \frac{L}{c}.$$

c represents a speed of light, and a carrier period T of the first constant envelope signal is a positive integer.

For example, the communication positioning distance L may be 5 meters, the speed of light $c=3*10^8$ meters/second, and the carrier period may be 2.

It should be noted that the communication positioning distance L should be a maximum communication distance designed by the system. In other words, the communication positioning distance L has different values in different actual cases, and is a maximum value of an allowed communication distance.

According to the integrated communication and positioning method provided in embodiments of this application, the carrier period of the first constant envelope signal can be determined based on the communication positioning distance, and the carrier period of the first constant envelope signal can be flexibly adjusted based on an actual scenario, thereby improving flexibility of integrated communication and positioning.

In an optional embodiment, a propagation direction of the second constant envelope signal may be parallel to a propagation direction of the first constant envelope signal.

The terminal device may implement that the propagation direction of the reflected second constant envelope signal is parallel to the propagation direction of the first constant envelope signal. In other words, the terminal device reflects the first constant envelope signal at an angle of obtaining the first constant envelope signal.

For example, an active or passive reverse reflector (retro reflective) may be installed on the terminal device, and the propagation direction of the second constant envelope signal formed by reflecting the first constant envelope signal by the reverse reflector of the terminal device may be parallel to the propagation direction of the first constant envelope signal.

When a lens is deployed on the network device, the second constant envelope signal formed by the reverse reflector may be refracted to the PD through the lens, and the PD obtains the second constant envelope signal.

When no lens is deployed on the network device, the second constant envelope signal formed by the reverse reflector may be directly obtained by the PD.

According to the integrated communication and positioning method provided in embodiments of this application, the propagation direction of the second constant envelope signal formed by reflection by the terminal device is parallel to the propagation direction of the first constant envelope signal, and diffuse reflection is alleviated in a spatial multiplexing manner. This helps a reflected constant envelope signal transmitted by the light source be obtained by a PD corresponding to the light source, reduces a possibility of obtaining a signal by a PD corresponding to another light source, and improves positioning precision.

Optionally, the network device may further alleviate a phenomenon of diffuse reflection by adjusting transmit power of the light source.

For example, the network device may control the transmit power of the light source, so that the reflected signal of the first constant envelope signal sent by the network device can be exactly obtained by the PD corresponding to the light source, and a PD corresponding to another light source cannot obtain the reflected signal.

According to the integrated communication and positioning method provided in this embodiment of this application, when the terminal device can demodulate the downlink data and the network device can implement positioning, the transmit power of the light source is reduced as much as possible, so that a constant envelope signal transmitted by the light source is obtained by the PD corresponding to the light source after being reflected, thereby reducing a possibility of obtaining the signal by the PD corresponding to the another light source, and improving positioning precision.

To better understand embodiments of this application, the following describes in detail a system architecture of embodiments of this application by using an example in which the light source is LEDs and a quantity of light sources is 4.

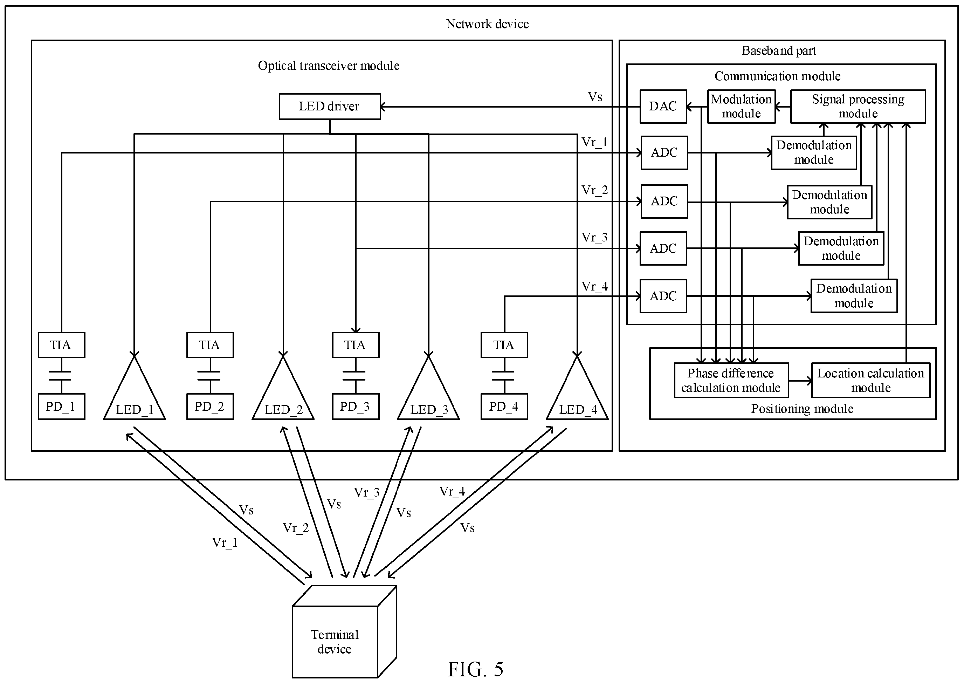

FIG. 5 is a schematic diagram of a system architecture. As shown in FIG. 5, the network device may be divided into a baseband part and an optical transceiver module. The baseband part may include a communication module and a positioning module. The communication module may include a signal processing module, a modulation module, a demodulation module, an analog-to-digital converter (analog-to-digital converter, ADC), and a digital-to-analog converter (digital-to-analog converter, DAC). The positioning module includes a phase difference calculation module and a location calculation module. The optical transceiver module may include an LED driver, 4 LEDs whose spatial locations do not overlap and whose spatial locations are known, PDs corresponding to the LEDs, a capacitor, and a trans-impedance amplifier (trans-impedance amplifier, TIA). As shown in FIG. 5, the four LEDs are respectively an LED_1, an LED_2, an LED_3, and an LED_4. APD corresponding to the LED_1 is a PD_1, a PD corresponding to the LED_2 is a PD_2, a PD corresponding to the LED_3 is a PD_3, and a PD corresponding to the LED_4 is a PD_4. The LED and the PD corresponding to the LED overlap in terms of spatial locations, that is, spatial locations of the LED_1 and the PD_1 overlap, spatial locations of the LED_2 and the PD_2 overlap, spatial locations of the LED_3 and the PD_3 overlap, and spatial locations of the LED_4 and the PD_4 overlap.

In FIG. 5, coverage areas of the four LEDs partially overlap, and the terminal device is located in an overlapping part of the coverage areas of the four LEDs. The network device may determine the location information of the terminal device, and may communicate with the terminal device.

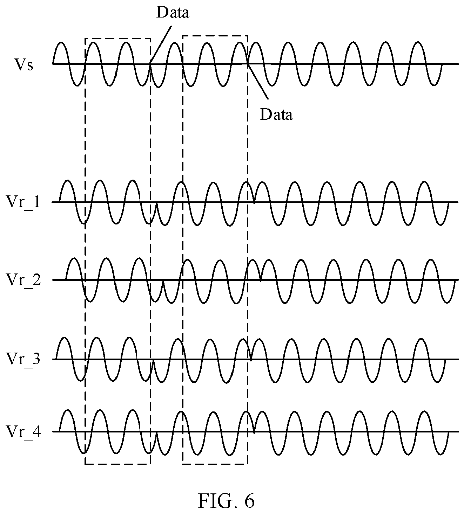

Refer to the foregoing method 200. In FIG. 5, the signal processing module of the network device determines to send the first constant envelope signal. After the first constant envelope signal passes through the modulation module and the DAC, an LED driver drives the LED_1, the LED_2, the LED_3, and the LED_4 to send the first constant envelope signal at the same time. The first constant envelope signal may be $V_s$. The terminal device is located in an overlapping part of a coverage area of the four LEDs, and may receive four first constant envelope signals $V_s$. As shown in FIG. 6, a symbol length of the first constant envelope signal is three carrier periods, and the first constant envelope signal further carries the downlink data.

In one aspect, the terminal device may also be deployed with a PD, the terminal device may obtain the four first constant envelope signals through the PD, and the terminal device may separately demodulate some signals of the four first constant envelope signals, to obtain the downlink data. A quantity of PDs deployed on the terminal device is not limited in this embodiment of this application.

In another aspect, an active or passive reverse reflector is installed on the terminal device. The terminal device may separately reflect remaining signals of the four first constant envelope signals through the reverse reflector. Spatial locations of the four LEDs do not overlap. Therefore, directions of the four first constant envelope signals obtained by the terminal device are different. The terminal device may separately reflect, through the reverse reflector, the obtained first constant envelope signals based on propagation directions of the first constant envelope signals, to form four second constant envelope signals in different propagation directions. The second constant envelope signals in the four different propagation directions may be a $V_{r\_1}$, a $V_{r\_2}$, a $V_{r\_3}$, and a $V_{r\_4}$ shown in FIG. 5. The $V_{r\_1}$ may be obtained by the terminal device by reflecting a first constant envelope signal sent by the LED_1, and the $V_{r\_1}$ may be obtained by the PD_1 corresponding to the LED_1. The $V_{r\_2}$ may be obtained by the terminal device by reflecting a first constant envelope signal sent by the LED_2, and the $V_{r\_2}$ may be obtained by the PD_2 corresponding to the LED_2. The $V_{r\_3}$ may be obtained by the terminal device by reflecting a first constant envelope signal sent by the LED_3, and the $V_{r\_3}$ may be obtained by the PD_3 corresponding to the LED_3. The $V_{r\_4}$ may be obtained by the terminal device by reflecting a first constant envelope signal sent by the LED_4, and the $V_{r\_4}$ may be obtained by the PD_4 corresponding to the LED_4.

To implement a positioning function, after the $V_{r\_1}$, the $V_{r\_2}$, the $V_{r\_3}$, and the $V_{r\_4}$ pass through corresponding ADCs, the phase difference calculation module may separately calculate a phase difference between the $V_s$ and the $V_{r\_1}$, a phase difference between the $V_s$ and the $V_{r\_2}$, a phase difference between the $V_s$ and the $V_{r\_3}$, and a phase difference between the $V_s$ and the $V_{r\_4}$ based on signals between the second carrier period and the third carrier period of each symbol of the first constant envelope signal. As shown in FIG. 6, phases of the $V_{r\_1}$ and the $V_s$, the $V_{r\_2}$ and the $V_s$, the $V_{r\_3}$ and the $V_s$, and the $V_{r\_4}$ and the $V_s$ change compared with each other. The location calculation module shown in FIG. 5 may separately calculate a phase difference between the $V_s$ and the $V_{r\_1}$, a phase difference between the $V_s$ and the $V_{r\_2}$, a phase difference between the $V_s$ and the $V_{r\_3}$, and a phase difference between the $V_s$ and the $V_{r\_4}$ based on signals (areas in a rectangular dashed box) between the second carrier period and the third carrier period of each symbol. The location calculation module may obtain the three-dimensional coordinates of the terminal device by performing calculation based on the four phase differences obtained by the phase difference calculation module and according to the foregoing step S204.

To implement a communication function, the $V_{r\_1}$, the $V_{r\_2}$, the $V_{r\_3}$, and the $V_{r\_4}$ may arrive at the signal processing module through the demodulation module after passing through the corresponding ADC.

Optionally, the terminal device may also be deployed with an LED. The terminal device may send, through the LED, an optical signal that carries uplink data. When obtaining the optical signal that carries the uplink data, the network device demodulates the optical signal to obtain the uplink data.

The following describes in detail the integrated communication and positioning method in embodiments of this application in different cases.

Case 1: There is one terminal device in a coverage area of the network device, and the network device may locate the terminal device and communicate with the terminal device.

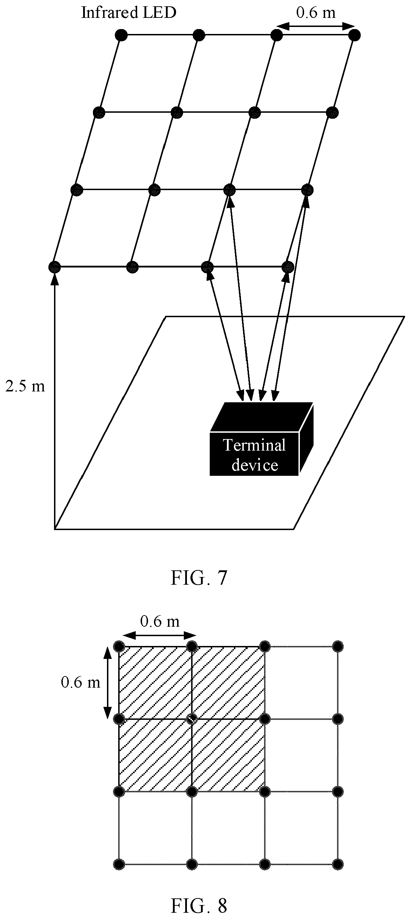

FIG. 7 is a schematic diagram of a deployment mode of a plurality of LEDs. In FIG. 7, 16 LEDs are deployed on the network device, spatial locations of the 16 LEDs do not overlap, wavelengths of the 16 LEDs may be 940 nanometers, and the 16 LEDs may simultaneously send the first constant envelope signal. The first constant envelope signal may be a single-carrier modulated binary phase shift keying (binary phase shift keying, BPSK) signal. A symbol length of the first constant envelope signal may include three carrier periods. A communication positioning distance L may be 5 meters. A carrier period T may be obtained according to a formula $T > 2 * \dfrac{L}{c}$ , and a frequency f may be obtained according to a formula $f = \dfrac{1}{T}$ . When L = 5, f < 30 megahertz (Mega Hertz, MHz). The frequency f may be 24 MHz.

It should be understood that the first constant envelope signal being the BPSK signal is merely an example, and the first constant envelope signal may alternatively be a binary frequency shift keying (binary frequency shift keying, BFSK) signal. This is not limited in this embodiment of this application.

Optionally, the LED may be an infrared LED.

As shown in FIG. 7, one black circle represents one LED, and there are 16 LEDs in total. An angle of view of each LED of the 16 LEDs may be 27°. The 16 LEDs are mounted at a height of 2.5 meters above the ground, and are arranged into a 4*4 array. A spacing between the LEDs is 0.6 meter. It should be understood that FIG. 7 shows only one deployment mode of the LEDs of the network device, and other modules of the network device are not shown. It should be further understood that 16 PDs may be deployed on the network device, that is, each LED corresponds to a PD, and a deployment mode of the PD is also a deployment mode of a 4*4 array.

The terminal device may move in an area covered by the 16 LEDs. A coverage area of each of the 16 LEDs is the same, and the coverage area is centered on the LED.

For example, FIG. 8 shows a coverage area of one LED in FIG. 7. As shown in FIG. 8, a coverage area of an LED filled with a pattern is an area filled with the pattern, that is, (0.6 + 0.6) * (0.6 + 0.6) =1.44 square meters.

It should be understood that, in a deployment mode in which the 16 LEDs are a 4*4 array, coverage areas of two adjacent LEDs overlap, and an overlapping range is 0.6*0.6=0.36 square meters.

If the location information of the terminal device is three-dimensional location information, BPSK signals sent by at least four LEDs need to be obtained. Therefore, the terminal device may obtain, within a coverage area of a 4*4 array including the 16 LEDs, the BPSK signals sent by the at least four LEDs, to implement a positioning function.

The terminal device may be installed with a passive reverse reflector. In the figure, black filling indicates that the reverse reflector is installed. The terminal device may reflect the obtained BPSK signal through the reverse reflector, and a propagation direction of the signal formed by reflection is parallel to a propagation direction of the obtained BPSK signal. The terminal device may further perform communication based on the obtained BPSK signal, that is, demodulate the obtained BPSK signal to obtain downlink data.

The network device may select a second carrier period to a last carrier period in each symbol of the BPSK signal sent by the LED and the BPSK signal obtained by the PD to measure a phase difference, and measure a distance from the LED to the terminal device based on the phase difference, to calculate the three-dimensional location information of the terminal device.

The LED may be further deployed on the terminal device, and an optical signal is sent through the LED. The network device may obtain the optical signal through the deployed PD, and demodulate the optical signal to obtain uplink data.

Communication between the terminal device and the network device may be intra-frequency and time-division.

Case 2: There are two terminal devices in a coverage area of the network device, and the network device may locate one of the terminal devices and communicate with the other terminal device. For ease of differentiation, in this embodiment, a terminal device implementing a positioning function is referred to as a to-be-located device, and a terminal device implementing a communication function is referred to as a communication terminal device.

It should be understood that, the to-be-located device may be equipped with a passive or active reverse reflector, and may have a communication function, or may not have a communication function. This is not limited in this embodiment of this application. The communication terminal device has only a communication function, that is, does not reflect the obtained optical signal.

For example, a deployment mode of the 16 LEDs of the network device may be the same as the mode shown in FIG. 7. In other words, the network device may deploy 16 LEDs. A deployment mode and a coverage area are the same as those described above. Details are not described herein again.

The network device may send a binary frequency shift keying (binary frequency shift keying, BFSK) signal through the LED, a communication positioning distance L may be 5 meters, a carrier period T may be obtained according to a formula $T > 2 * \dfrac{L}{c}$ , and a frequency f may be obtained according to a formula $f = \dfrac{1}{T}$ . When L = 5, f < 30 megahertz (MHz). The frequency f may be f_H=24 MHz, f_L=12 MHz, and one symbol of the BFSK signal may include carrier periods corresponding to three f_Ls and carrier periods corresponding to six f_Hs. It should be understood that the first constant envelope signal being the BFSK signal is merely an example, and the first constant envelope signal may alternatively be a BPSK signal. This is not limited in this embodiment of this application.

Optionally, the LED may be an infrared LED.

When the to-be-positioned device moves in an area covered by a 4*4 array formed by 16 LEDs, the to-be-positioned device may obtain BFSK signals sent by at least four LEDs. The to-be-positioned device may obtain the BFSK signals through reflection of a reverse reflector. A propagation direction of the signal formed by reflection is parallel to a propagation direction of the obtained BFSK signal. The network device may select a second carrier period to a last carrier period in each symbol of the BFSK signal sent by the LED and the BFSK signal obtained by the PD to measure a phase difference, and measure a distance from the LED to the to-be-located device based on the phase difference, to calculate the three-dimensional location information of the to-be-located device.

When the communication terminal device moves in an area covered by a 4*4 array formed by the 16 LEDs, the communication terminal device may obtain the BFSK signals sent by at least four the LEDs, and the communication terminal device may perform communication based on the obtained BFSK signals, that is, demodulate the obtained BFSK signals to obtain the downlink data.

Communication between the communication terminal device and the network device may be intra-frequency and time-division.

Case 3: There are two terminal devices in a coverage area of the network device, and the network device may locate the two terminal devices and simultaneously communicate with the two terminal devices. For ease of differentiation, the two terminal devices are respectively referred to as a terminal device 1 and a terminal device 2 in this embodiment.

An LED deployment mode of the network device may be similar to the mode shown in FIG. 7. A difference from FIG. 7 is that each LED in this embodiment corresponds to a PD array. Specifically, 16 LEDs are deployed on the network device, and each LED corresponds to one PD array. The PD array may be an 8*8 array, and a spatial location of the LEDs may be deployed in the middle of the 8*8 PD array.

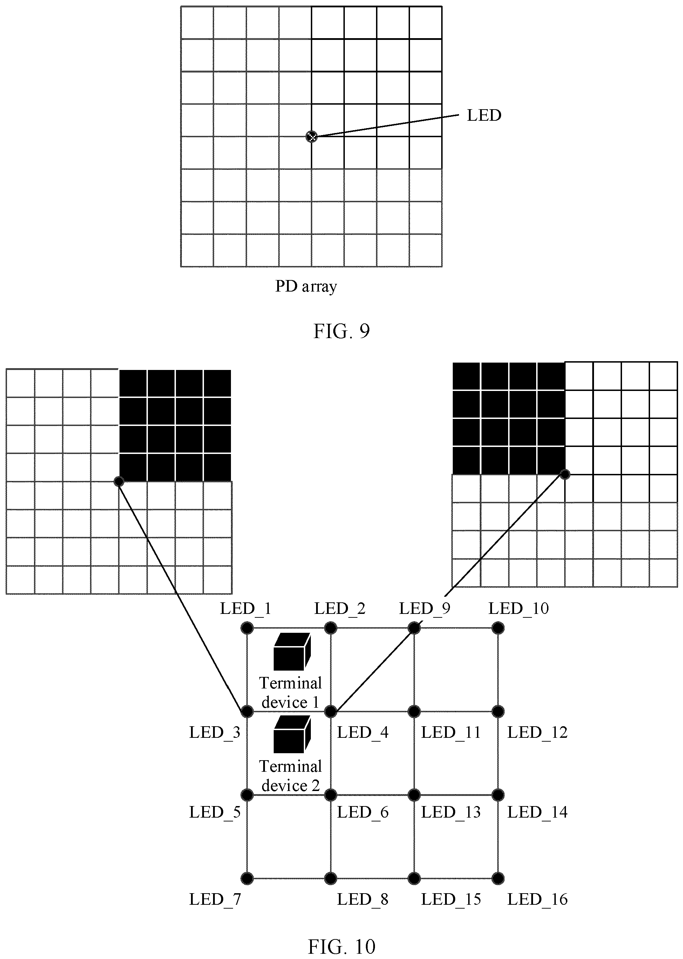

FIG. 9 is a schematic diagram of a deployment mode of an LED array and a PD array. As shown in FIG. 9, a circle filled with a pattern represents an LED, and each square represents a PD, to form an 8*8 PD array. A spatial location of the LED may be deployed in the middle of the 8*8 PD array corresponding to the LED. It should be understood that the 8*8 PD array is merely an example. This is not limited in this embodiment of this application.

FIG. 10 is a schematic diagram of a scenario in which a network device locates and communicates with two terminal devices. As shown in FIG. 10, 16 LEDs are deployed on the network device, and are respectively an LED_1, an LED_2, an LED_3, an LED_4, an LED_5, an LED_6, an LED_7, an LED_8, an LED_9, an LED_10, an LED_11, an LED_L2, an LED_13, an LED_14, an LED_15, and an LED_16. The 16 LEDs form a 4*4 LED array.

A terminal device 1 is located within a coverage area of the LED_1, the LED_2, the LED_3, and the LED_4, and the terminal device 2 is located within a coverage area of the LED_3, the LED_4, the LED_5, and the LED_6. The network device may separately obtain a phase difference based on the first constant envelope signal sent by the LED_1, the LED_2, the LED_3, and the LED_4 and the second constant envelope signal from the terminal device 1 obtained by PD arrays corresponding to the LED_1, the LED_2, the LED_3, and the LED_4, and calculate distances between the LED_1, the LED_2, the LED_3, the LED_4, and the terminal device 1, to obtain the location information of the terminal device 1. Similarly, the network device may separately obtain a phase difference based on the first constant envelope signal sent by the LED_3, the LED_4, the LED_5, and the LED_6 and the second constant envelope signal from the terminal device 2 obtained by PD arrays corresponding to the LED_3, the LED_4, the LED_5, and the LED_6, and calculate distances between the LED_3, the LED_4, the LED_5, the LED_6, and the terminal device 2, to obtain the location information of the terminal device 2.

Because the PD arrays corresponding to the LED_3 and the LED_4 may respectively obtain two reflected second constant envelope signals, that is, the second constant envelope signal of the terminal device 1 and the second constant envelope signal of the terminal device 2, the network device may obtain four distances through calculation, which are respectively a distance between the LED_3 and the terminal device 1, a distance between the LED_3 and the terminal device 2, a distance between the LED_4 and the terminal device 1, and a distance between the LED_4 and the terminal device 2. The network device may distinguish the foregoing four distances based on a location of the PD that obtains the second constant envelope signal in the PD array.

Specifically, a part of PDs in the PD arrays corresponding to the LED_3 and the LED_4 may obtain signals reflected by a same terminal device. As shown in FIG. 10, a black-filled PD in the PD array corresponding to the LED_3 and a black-filled PD in the PD array corresponding to the LED_4 may simultaneously obtain the second constant envelope signal of the terminal device 1. The network device may determine, based on that a PD that obtains the second constant envelope signal and that is in the PD array corresponding to the LED_3 is the black-filled PD, that the obtained distance is a distance between the LED_3 and the terminal device 1; and may determine, based on that a PD that obtains the second constant envelope signal and that is in the PD array corresponding to the LED_4 is the black-filled PD, that the obtained distance is a distance between the LED_4 and the terminal device 1.

A method for distinguishing the distance between the LED_3 and the terminal device 2 and the distance between the LED_4 and the terminal device 2 is similar to the foregoing method, and details are not described herein again.

In the scenario shown in FIG. 10, the terminal device 1 and the terminal device 2 may further separately communicate with the network device through code division multiple access. This is not limited in this embodiment of this application.

According to the integrated communication and positioning method provided in this embodiment of this application, a network device may locate and communicate with a plurality of terminal devices, and therefore has a wider application scope and higher universality.

The sequence numbers of the foregoing processes do not mean execution sequences. The execution sequences of the processes should be determined based on functions and internal logic of the processes, and should not constitute any limitation on implementation processes of embodiments of this application.

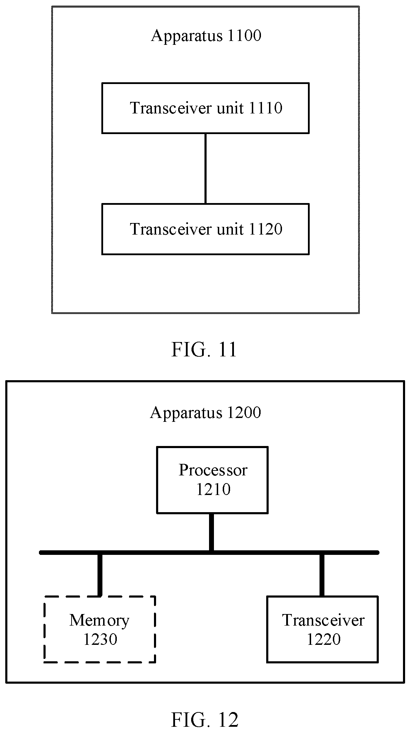

The foregoing describes in detail the integrated communication and positioning method provided in embodiments of this application with reference to FIG. 1 to FIG. 10. The following describes in detail an integrated communication and positioning apparatus provided in embodiments of this application with reference to FIG. 11 to FIG. 13.

FIG. 11 is a schematic diagram of an integrated communication and positioning apparatus 1100 according to an embodiment of this application. The apparatus 1100 may be a terminal device, or may be a chip in a terminal device. In another design, the apparatus 1100 may be a network device, or may be a chip in a network device. As shown in FIG. 11, an apparatus 1100 includes a transceiver unit 1110 and a processing unit 1220.

In a possible implementation, the apparatus 1100 is configured to perform procedures and steps corresponding to the terminal device in the foregoing method embodiments.

The transceiver unit 1110 is configured to: obtain a first constant envelope signal, where the first constant envelope signal is a single-carrier modulated continuous wave signal; and send a second constant envelope signal, where the second constant envelope signal is a signal formed by reflecting the first constant envelope signal by the apparatus 1100, and the second constant envelope signal is used for positioning. The processing unit 1220 is configured to demodulate the first constant envelope signal to obtain downlink data.

Optionally, the transceiver unit 1110 is further configured to obtain location information, where the location information is location information of the apparatus 1100.

Optionally, a propagation direction of the second constant envelope signal is parallel to a propagation direction of the first constant envelope signal.

Optionally, a symbol length of the first constant envelope signal is greater than or equal to two carrier periods of the first constant envelope signal.

Optionally, a carrier period T and a communication positioning distance L of the first constant envelope signal

$$T > 2 * \frac{L}{c}$$

meet the following formula: , where c represents a speed of light.

Optionally, a phase difference between the first constant envelope signal and the second constant envelope signal is determined based on a signal between a second carrier period and a last carrier period of each symbol of the first constant envelope signal.

In another possible implementation, the apparatus 1100 is configured to perform procedures and steps corresponding to the network device in the foregoing method embodiments.

The transceiver unit 1110 is configured to: send a first constant envelope signal through a light source, where the first constant envelope signal is a single-carrier modulated continuous wave signal; and obtain a second constant envelope signal through a photoelectric detector PD, where the second constant envelope signal is a signal formed by reflecting the first constant envelope signal by a terminal device. The processing unit 1120 is configured to: determine a distance between the light source and the terminal device based on a phase difference between the first constant envelope signal and the second constant envelope signal; and determine location information of the terminal device based on the distance between the light source and the terminal device. The transceiver unit 1110 is further configured to perform communication through the first constant envelope signal.

Optionally, the transceiver unit 1110 is further configured to send the location information of the terminal device.

Optionally, a propagation direction of the second constant envelope signal is parallel to a propagation direction of the first constant envelope signal.

Optionally, a symbol length of the first constant envelope signal is greater than or equal to two carrier periods of the first constant envelope signal.

Optionally, a carrier period T and a communication positioning distance L of the first constant envelope signal

$$T > 2 * \frac{L}{c}$$

meet the following formula: , where c represents a speed of light.

Optionally, a phase difference between the first constant envelope signal and the second constant envelope signal is determined based on a signal between a second carrier period and a last carrier period of each symbol of the first constant envelope signal.

Optionally, there are at least four light sources, and the location information of the terminal device is three-dimensional coordinates.

It should be understood that the apparatus 1100 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1100 may be specifically the terminal device or the network device in the foregoing method embodiments, or functions of the terminal device or the network device in the foregoing method embodiments may be integrated into the apparatus 1100. The apparatus 1100 may be configured to perform procedures and/or steps corresponding to the terminal device or the network device in the foregoing method embodiments. To avoid repetition, details are not described herein again.

The apparatus 1100 has a function of implementing corresponding steps performed by the terminal device or the network device in the foregoing method embodiments. The foregoing functions may be implemented by hardware, or may be implemented by hardware executing corresponding software. The hardware or the software includes one or more units corresponding to the functions. For example, the transceiver unit 1110 may include a sending unit and a receiving unit. The sending unit may be configured to implement steps and/or procedures that are corresponding to the transceiver unit and that are used to perform a sending action, and the receiving unit may be configured to implement steps and/or procedures that are corresponding to the transceiver unit and that are used to perform a receiving action. The sending unit may be replaced by a transmitter, and the receiving unit may be replaced by a receiver, to respectively perform sending and receiving operations and related processing operations in the method embodiments.

In this embodiment of this application, the apparatus 1100 in FIG. 11 may also be a chip or a chip system, for example, a system on chip (system on chip, SoC).

FIG. 12 is a schematic block diagram of another integrated communication and positioning apparatus 1200 according to an embodiment of this application. The apparatus 1200 includes a processor 1210, a transceiver 1220, and a memory 1230. The processor 1210, the transceiver 1220, and the memory 1230 communicate with each other through an internal connection path. The memory 1230 is configured to store instructions. The processor 1210 is configured to execute the instructions stored in the memory 1230, to control the transceiver 1220 to send a signal and/or receive a signal.

It should be understood that the apparatus 1200 may be specifically the terminal device in the foregoing method embodiments, or functions of the terminal device in the foregoing method embodiments may be integrated into the apparatus 1200. The apparatus 1200 may be configured to perform steps and/or procedures corresponding to the terminal device in the foregoing method embodiments. Optionally, the memory 1230 may include a read-only memory and a random access memory, and provide instructions and data for the processor. A part of the memory may further include a non-volatile random access memory. For example, the memory may further store information of a device type. The processor 1210 may be configured to execute the instructions stored in the memory, and when the processor executes the instructions, the processor may perform the steps and/or procedures corresponding to the terminal device in the foregoing method embodiments.

It should be understood that, in this embodiment of this application, the processor 1210 may be a central processing unit (central processing unit, CPU), or the processor may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

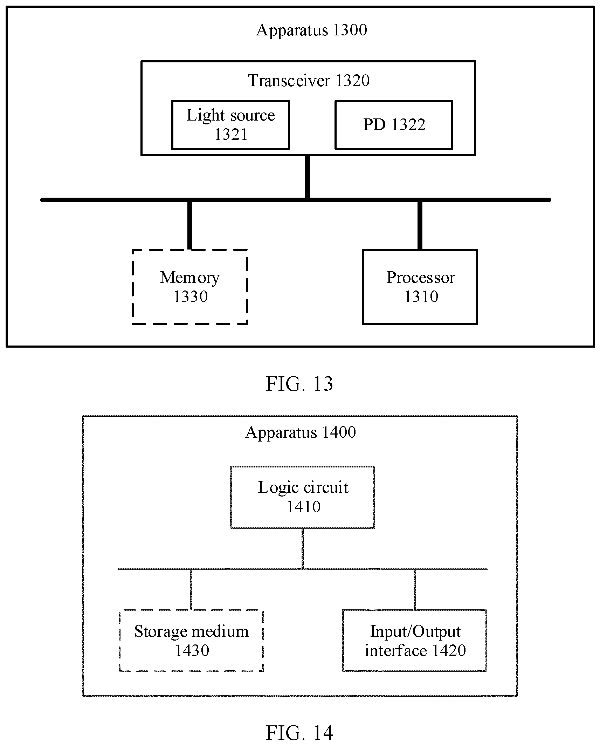

FIG. 13 is a schematic block diagram of still another integrated communication and positioning apparatus 1300 according to an embodiment of this application. The apparatus 1300 includes a processor 1310, a transceiver 1320, and a memory 1330. The transceiver 1320 includes a light source 1321 and a PD 1322. The processor 1310 is configured to: send a first constant envelope signal through the light source 1321, where the first constant envelope signal is a single-carrier modulated continuous wave signal; obtain a second constant envelope signal through the PD 1322, where the second constant envelope signal is a signal formed by reflecting the first constant envelope signal by the terminal device; determine a distance between the light source 1321 and the terminal device based on a phase difference between the first constant envelope signal and the second constant envelope signal; determine location information of the terminal device based on the distance between the light source 1321 and the terminal device; and perform communication through the first constant envelope signal. The processor 1310, the transceiver 1320, and the memory 1330 communicate with each other through an internal connection path. The memory 1330 is configured to store instructions. The processor 1310 is configured to execute the instructions stored in the memory 1330, to control the transceiver 1320 to send a signal and/or receive a signal.

It should be understood that the apparatus 1300 may be specifically the network device in the foregoing method embodiments, or functions of the network device in the foregoing method embodiments may be integrated into the apparatus 1300. The apparatus 1300 may be configured to perform steps and/or procedures corresponding to the network device in the foregoing method embodiments. Optionally, the memory 1230 may include a read-only memory and a random access memory, and provide instructions and data for the processor. A part of the memory may further include a non-volatile random access memory. For example, the memory may further store information of a device type. The processor 1310 may be configured to execute the instructions stored in the memory, and when the processor executes the instructions, the processor may perform the steps and/or procedures corresponding to the network device in the foregoing method embodiments.

It should be understood that, in this embodiment of this application, the processor 1310 may be a central processing unit (central processing unit, CPU), or the processor may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

FIG. 14 is a schematic block diagram of a communication apparatus 1400 according to an embodiment of this application. The apparatus 1400 includes a logic circuit 1410 and an input/output interface 1420. The logic circuit 1410 and the input/output interface 1420 communicate with each other through an internal connection path. The logic circuit 1410 is configured to execute instructions, to control the input/output interface 1420 to send a signal and/or receive a signal. The input/output interface 1420 is configured to receive a signal from another communication apparatus other than the apparatus 1400, and transmit the signal to the logic circuit 1410, or send a signal from the logic circuit 1410 to another communication apparatus other than the apparatus 1400.

Optionally, the apparatus 1400 may further include a storage medium 1430. The storage medium 1430 communicates with the logic circuit 1410 and the input/output interface 1420 through an internal connection path. The storage medium 1430 is configured to store instructions, and the logic circuit 1410 may execute the instructions stored in the storage medium 1430. In a possible implementation, the apparatus 1400 is configured to implement procedures and steps corresponding to the terminal device in the foregoing method embodiments. In another possible implementation, the apparatus 1400 is configured to implement procedures and steps corresponding to the network device in the foregoing method embodiments.

An embodiment of this application further provides a communication system. The communication system may include the apparatus (the apparatus 1200 is represented as a terminal device) shown in FIG. 12 and the apparatus (the apparatus 1300 is represented as a network device) shown in FIG. 13.

This application further provides a computer-readable storage medium. The computer-readable storage medium is configured to store a computer program, and the computer program is used to implement the method corresponding to the terminal device or the network device in the foregoing method embodiments.

This application further provides a computer program product. The computer program product includes a computer program (which may also be referred to as code or instructions). When the computer program is run on a computer, the computer may perform the method corresponding to the terminal device or the network device shown in the foregoing method embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application, or a part that makes contributions to the prior art, or a part of the technical solutions may be embodied in a form of a software product. The computer software product is stored in a storage medium, and includes several instructions for instructing a computer device (which may be a personal computer, a server, a receive end, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An integrated communication and positioning method, comprising:

   obtaining, by a terminal device, a first constant envelope signal, wherein the first constant envelope signal is a single-carrier modulated continuous wave signal;
   sending, by the terminal device, a second constant envelope signal, wherein the second constant envelope signal is a signal formed by reflecting the first constant envelope signal by the terminal device, and the second constant envelope signal is used for positioning; and
   demodulating, by the terminal device, the first constant envelope signal to obtain downlink data.

2. The method according to claim 1, wherein the method further comprises:
   obtaining, by the terminal device, location information, wherein the location information is location information of the terminal device.

3. The method according to claim 1 or 2, wherein a propagation direction of the second constant envelope signal is parallel to a propagation direction of the first constant envelope signal.

4. The method according to any one of claims 1 to 3, wherein a symbol length of the first constant envelope signal is greater than or equal to two carrier periods of the first constant envelope signal.

5. The method according to any one of claims 1 to 4, wherein a carrier period T and a communication positioning distance L of the first constant envelope signal meet the following formula:

$$T > 2 * \frac{L}{c}$$

   ; and
   c represents a speed of light.

6. The method according to any one of claims 1 to 5, wherein a phase difference between the first constant envelope signal and the second constant envelope signal is determined based on a signal between a second carrier period and a last carrier period of each symbol of the first constant envelope signal.

7. An integrated communication and positioning method, used on a network device on which a light source and a photoelectric detector PD are deployed, wherein the method comprises:

sending, by the network device, a first constant envelope signal through the light source, wherein the first constant envelope signal is a single-carrier modulated continuous wave signal;
obtaining, by the network device, a second constant envelope signal through the PD, wherein the second constant envelope signal is a signal formed by reflecting the first constant envelope signal by a terminal device;
determining, by the network device, a distance between the light source and the terminal device based on a phase difference between the first constant envelope signal and the second constant envelope signal;
determining, by the network device, location information of the terminal device based on the distance between the light source and the terminal device; and
communicating, by the network device, with the terminal device through the first constant envelope signal.

8. The method according to claim 7, wherein the method further comprises:
sending, by the network device, the location information of the terminal device.

9. The method according to claim 7 or 8, wherein a propagation direction of the second constant envelope signal is parallel to a propagation direction of the first constant envelope signal.

10. The method according to any one of claims 7 to 9, wherein a symbol length of the first constant envelope signal is greater than or equal to two carrier periods of the first constant envelope signal.

11. The method according to any one of claims 7 to 10, wherein a carrier period T and a communication positioning distance L of the first constant envelope signal meet the following formula:

$$T > 2 * \frac{L}{c}$$

; and
c represents a speed of light.

12. The method according to any one of claims 7 to 11, wherein the phase difference between the first constant envelope signal and the second constant envelope signal is determined based on a signal between a second carrier period and a last carrier period of each symbol of the first constant envelope signal.

13. The method according to any one of claims 7 to 12, wherein a quantity of light sources is at least 4, and the location information of the terminal device is three-dimensional coordinates.

14. An integrated communication and positioning apparatus, comprising:

a transceiver unit, configured to: obtain a first constant envelope signal, wherein the first constant envelope signal is a single-carrier modulated continuous wave signal; and send a second constant envelope signal, wherein the second constant envelope signal is a signal formed by reflecting the first constant envelope signal by the apparatus, and the second constant envelope signal is used for positioning; and
a processing unit, configured to demodulate the first constant envelope signal to obtain downlink data.

15. The apparatus according to claim 14, wherein the transceiver unit is further configured to:
obtain location information, wherein the location information is location information of the apparatus.

16. The apparatus according to claim 14 or 15, wherein a propagation direction of the second constant envelope signal is parallel to a propagation direction of the first constant envelope signal.

17. The apparatus according to any one of claims 14 to 16, wherein a symbol length of the first constant envelope signal is greater than or equal to two carrier periods of the first constant envelope signal.

18. The apparatus according to any one of claims 14 to 17, wherein a carrier period T and a communication positioning distance L of the first constant envelope signal meet the following formula:

$$T > 2 * \frac{L}{c}$$

; and
c represents a speed of light.

19. The apparatus according to any one of claims 14 to 18, wherein a phase difference between the first constant envelope signal and the second constant envelope signal is determined based on a signal between a second carrier period and a last carrier period of each symbol of the first constant envelope signal.

20. An integrated communication and positioning apparatus, comprising:

a transceiver unit, configured to: send a first constant envelope signal through a light source, wherein the first constant envelope signal is a single-carrier modulated continuous wave signal; and obtain a second constant envelope signal through a photoelectric detector PD, wherein the second constant envelope signal is a signal formed by reflecting the first constant envelope signal by a terminal device; and
a processing unit, configured to: determine a distance between the light source and the terminal device based on a phase difference between the first constant envelope signal and the second constant envelope signal; and determine location information of the terminal device based on the distance between the light source and the terminal device, wherein
the transceiver unit is further configured to communicate with the terminal device through the first constant envelope signal.

21. The apparatus according to claim 20, wherein the transceiver unit is further configured to: send the location information of the terminal device.

22. The apparatus according to claim 20 or 21, wherein a propagation direction of the second constant envelope signal is parallel to a propagation direction of the first constant envelope signal.

23. The apparatus according to any one of claims 20 to 22, wherein a symbol length of the first constant envelope signal is greater than or equal to two carrier periods of the first constant envelope signal.

24. The apparatus according to any one of claims 20 to 23, wherein a carrier period T and a communication positioning distance L of the first constant envelope signal meet the following formula:

$$T > 2 * \frac{L}{c}$$

; and
c represents a speed of light.

25. The apparatus according to any one of claims 20 to 24, wherein the phase difference between the first constant envelope signal and the second constant envelope signal is determined based on a signal between a second carrier period and a last carrier period of each symbol of the first constant envelope signal.

26. The apparatus according to any one of claims 20 to 25, wherein a quantity of light sources is at least 4, and the location information of the terminal device is three-dimensional coordinates.

27. An integrated communication and positioning apparatus, comprising a processor, wherein the processor is coupled to a memory, the memory is configured to store a computer program, and when the processor invokes the computer program, the apparatus is enabled to perform the method according to any one of claims 1 to 6.

28. An integrated communication and positioning apparatus, comprising a processor and a transceiver, wherein the transceiver comprises a light source and a photoelectric detector PD, the transceiver sends a first constant envelope signal through the light source, the transceiver obtains a second constant envelope signal through the photoelectric detector PD, the processor is coupled to a memory, the memory is configured to store a computer program, and when the processor invokes the computer program, the apparatus is enabled to perform the method according to any one of claims 7 to 13.

29. A terminal device, comprising an input/output interface and a logic circuit, wherein the input/output interface is configured to obtain a first constant envelope signal, and the logic circuit is configured to demodulate the first constant envelope signal to obtain downlink data, so that the terminal device performs the method according to any one of claims 1 to 6.

30. A network device, comprising an input/output interface and a logic circuit, wherein the input/output interface is configured to send a first constant envelope signal through a light source, and the logic circuit is configured to determine location information, so that the network device performs the method according to any one of claims 7 to 13.

31. A computer-readable storage medium, wherein the computer-readable storage medium stores a computer program, and when the computer program is run on a computer, the method according to any one of claims 1 to 6 or the method according to any one of claims 7 to 13 is performed.

32. A computer program product, wherein the computer program product comprises instructions, and when the instructions are executed, the method according to any one of claims 1 to 6 or the method according to any one of claims 7 to 13 is performed.

FIG. 1

200

```
Network                                           Terminal
device                                            device
   │                                                 │
   │──── S201: First constant envelope signal ──────▶│
   │                                                 │
   │         S202: Second constant                   │
   │◀──────────  envelope signal  ───────────────────│
   │                                                 │
```

S203: Determine a distance between a light source and the terminal device based on a phase difference between the first constant envelope signal and the second constant envelope signal

S204: Determine location information of the terminal device based on the distance between the light source and the terminal device

S205: Perform communication through the first constant envelope signal

S206: Demodulate the first constant envelope signal to obtain downlink data

FIG. 2

A carrier period    Data

First constant
envelope signal

A symbol length of a first
constant envelope signal    Data

FIG. 3

FIG. 4

FIG. 5

FIG. 6

FIG. 7

FIG. 8

PD array

FIG. 9

LED_1    LED_2    LED_9    LED_10

Terminal
device 1

LED_3    LED_4    LED_11    LED_12

Terminal
device 2

LED_5    LED_6    LED_13    LED_14

LED_7    LED_8    LED_15    LED_16

FIG. 10

Apparatus 1100

Transceiver unit 1110

Transceiver unit 1120

FIG. 11

Apparatus 1200

Processor
1210

Memory
1230

Transceiver
1220

FIG. 12

Apparatus 1300

Transceiver 1320

| Light source 1321 | PD 1322 |

Memory 1330

Processor 1310

FIG. 13

Apparatus 1400

Logic circuit 1410

Storage medium 1430

Input/Output interface 1420

FIG. 14

## INTERNATIONAL SEARCH REPORT

International application No.

**PCT/CN2022/119142**

### A. CLASSIFICATION OF SUBJECT MATTER

H04W 64/00(2009.01)i; G01S 5/16(2006.01)i; H04B 10/116(2013.01)i; H04B 10/516(2013.01)i

According to International Patent Classification (IPC) or to both national classification and IPC

### B. FIELDS SEARCHED

Minimum documentation searched (classification system followed by classification symbols)

H04W; G01S; H04B

Documentation searched other than minimum documentation to the extent that such documents are included in the fields searched

Electronic data base consulted during the international search (name of data base and, where practicable, search terms used)

CNABS; CNTXT; CNKI; VEN; ENTXT; USTXT; WOTXT; EPTXT; 3GPP: 光保真, 光通信, 可见光, 定位, 室内, 光探测器, 光电探测器, 反射, 相移, 相位差, 单载波, 包络, light fidelity, LiFi, optical wireless communication, OWC, Visible Light Communication, VLC, LED, locat+, position+, indoor, PD, detector?, reflect+, phase, shift+, carrier, single, envelope

### C. DOCUMENTS CONSIDERED TO BE RELEVANT

| Category* | Citation of document, with indication, where appropriate, of the relevant passages | Relevant to claim No. |
|---|---|---|
| A | CN 106788730 A (UNIVERSITY OF SCIENCE AND TECHNOLOGY OF CHINA) 31 May 2017 (2017-05-31) description, paragraphs [0025]-[0036], and figures 1-3 | 1-32 |
| A | CN 106443586 A (ZHEJIANG NORMAL UNIVERSITY) 22 February 2017 (2017-02-22) entire document | 1-32 |
| A | CN 112291004 A (GUANGDONG OPPO MOBILE COMMUNICATIONS CO., LTD.) 29 January 2021 (2021-01-29) entire document | 1-32 |
| A | US 5600471 A (VICTOR COMPANY OF JAPAN) 04 February 1997 (1997-02-04) entire document | 1-32 |

☐ Further documents are listed in the continuation of Box C. ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 November 2022** | **30 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/119142**

| Patent document cited in search report | | | Publication date (day/month/year) | Patent family member(s) | Publication date (day/month/year) |
|---|---|---|---|---|---|
| CN | 106788730 | A | 31 May 2017 | None | |
| CN | 106443586 | A | 22 February 2017 | None | |
| CN | 112291004 | A | 29 January 2021 | None | |
| US | 5600471 | A | 04 February 1997 | None | |

**REFERENCES CITED IN THE DESCRIPTION**

**Patent documents cited in the description**

- CN 202111159120